# EUROPEAN PATENT APPLICATION

(11) **EP 4 682 647 A1**
(43) Date of publication of application: **21.01.2026**
(21) Application number: 24784401.2
(22) Date of filing: 03.04.2024
(51) Int. Cl.: G05B 15/02, G05B 19/418, G06F 3/042

(54) **DEVICE CONTROL METHOD AND APPARATUS, HOME APPLIANCE DEVICE AND STORAGE MEDIUM**

(30) Priority: 04.04.2023 CN 202310355320
(71) Applicant: Qingdao Haier Washing Machine Co., Ltd., Qingdao, Shandong 266101 (CN); HAIER SMART HOME CO., LTD., Qingdao, Shandong 266101 (CN)
(72) Inventor: XIAO, Yunxuan, Qingdao, Shandong 266101 (CN); WANG, Kunfei, Qingdao, Shandong 266101 (CN); GAO, Qiuying, Qingdao, Shandong 266101 (CN); QI, Chunsheng, Qingdao, Shandong 266101 (CN); WANG, Liming, Qingdao, Shandong 266101 (CN); WEI, Tiesheng, Qingdao, Shandong 266101 (CN); ZHANG, Yuxue, Qingdao, Shandong 266101 (CN); GUO, Fengna, Qingdao, Shandong 266101 (CN)
(74) Representative: Linage González, Rafael
(86) International application number: PCT/CN2024/085994
(87) International publication number: WO 2024/208319

(57) **Abstract**

Provided are a device control method and apparatus, a home appliance, and a storage medium, relating to the technical field of intelligent control. The method includes: generating a virtual function interface through a laser projection assembly and displaying the virtual function interface in a target projection region; and receiving a selection operation for the virtual function interface to determine a target program and controlling the home appliance to execute the target program. In this manner, the panel space of the home appliance can be saved, thereby reducing the product volume of the home appliance, reducing the space occupied by the home appliance, and enhancing the user experience in using the home appliance.

## Description

This application claims priority to Chinese Patent Application No. 202310355320.8 filed on Apr. 4, 2023, the disclosure of which is incorporated herein by reference in its entirety.

### Technical Field

The present application relates to the technical field of intelligent control, for example, a device control method and apparatus, a home appliance, and a storage medium.

### Background

With the rapid development of intelligent technology, users increasingly expect home appliances (such as washing machines) to be more compact and intelligent, and prefer that such appliances occupy as little space at home as possible. In the related art, a home appliance is typically provided with physical buttons that occupy a large amount of the panel space of the home appliance, thereby adversely affecting the product volume of the home appliance, making it impossible to reduce the space occupied by the home appliance, and ultimately resulting in poor user experience. Therefore, how to reduce the panel space of a home appliance has become an urgent problem to be solved.

### Summary

The present application provides a device control method and apparatus, a home appliance, and a storage medium, which can save the panel space of the home appliance, thereby reducing the product volume of the home appliance, reducing the space occupied by the home appliance, and enhancing the user experience in using the home appliance.

In a first aspect, the present application provides a device control method. The device control method is applied to a home appliance, and the home appliance is provided with a laser projection assembly. The method includes: generating a virtual function interface through the laser projection assembly and displaying the virtual function interface in a target projection region; and receiving a selection operation for the virtual function interface to determine a target program and controlling the home appliance to execute the target program.

In a second aspect, the present application provides a device control apparatus. The device control apparatus is integrated into a home appliance, and the home appliance is provided with a laser projection assembly. The apparatus includes an interface displaying module configured to generate a virtual function interface through the laser projection assembly and display the virtual function interface in a target projection region; and a device control module configured to receive a selection operation for the virtual function interface to determine a target program and control the home appliance to execute the target program.

In a third aspect, the present application provides a home appliance. The home appliance includes at least one processor and a memory communicatively connected to the at least one processor. The memory stores a computer program executable by the at least one processor to cause the at least one processor to perform the device control method of any embodiment of the present application.

In a fourth aspect, the present application provides a computer-readable storage medium. The computer-readable storage medium stores computer instructions that, when executed by a processor, are configured to cause the processor to perform the device control method of any embodiment of the present application.

### Brief Description of Drawings

FIG. 1 is a first flowchart of a device control method according to an embodiment of the present application.
FIG. 2 is a side diagram of a laser projection assembly according to an embodiment of the present application.
FIG. 3 is a second flowchart of a device control method according to an embodiment of the present application.
FIG. 4 is a diagram illustrating the structure of a device control apparatus according to an embodiment of the present application.
FIG. 5 is a block diagram of a home appliance for implementing a device control method according to an embodiment of the present application.

### Detailed Description

Terms such as "first", "second", "target", and "original" in the description, claims, and drawings of the present application are used for distinguishing between similar objects and are not necessarily used for describing a particular order or sequence. It is to be understood that data used in this manner are interchangeable where appropriate so that embodiments of the present application described herein can be implemented in an order not illustrated or described herein. Additionally, terms "include", "have", and any variations thereof are intended to encompass a non-exclusive inclusion. For example, a process, method, system, product, or device that includes a series of steps or units not only includes the expressly listed steps or units but may also include other steps or units that are not expressly listed or are inherent to such process, method, product, or device.

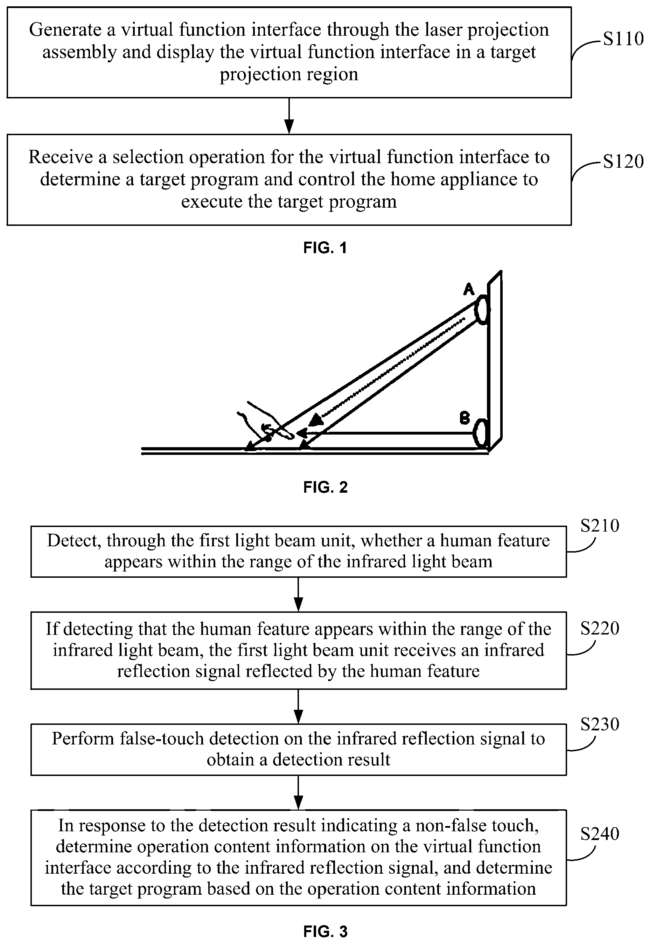

FIG. 1 is a first flowchart of a device control method according to an embodiment of the present application. This embodiment is applicable to selecting a target program by a virtual function interface displayed in a target projection region so as to control a home appliance to execute the target program. The device control method provided in this embodiment may be executed by a device control apparatus provided in an embodiment of the present application. The apparatus may be implemented by software and/or hardware, and is integrated into an electronic device performing the method. The electronic device in the embodiment of the present application may be a home appliance, and the home appliance is provided with a laser projection assembly. The home appliance may be a washing device, a drying device, or a refrigeration and heating device, and in this embodiment, the washing device is used as an example to illustrate the device control method of the present application.

Referring to FIG. 1, the method of this embodiment includes, but is not limited to, the steps below.

In S110, a virtual function interface is generated through the laser projection assembly, and the virtual function interface is displayed in a target projection region.

The laser projection assembly is configured to project the virtual function interface onto the target projection region. The laser projection assembly may be disposed at any position on the body of the washing device, such as a middle portion or upper portion of the body, and may be mounted onto any side of side surfaces of the appearance of the washing device. A user may flexibly adjust the mounting position and mounting angle of the laser projection assembly according to the actual mounting condition of the washing device. The target projection region may be any blank region on the body of the washing device, such as the blank housing on the front of the appearance of the washing device. The shape of the region is not limited and may optionally be rectangular. The virtual function interface includes not only all the physical button functions of the washing device (such as water volume, temperature, washing mode, washing duration, and number of rinses), but also other functions (such as scheduled washing and notifying the user after washing).

In an embodiment, before the virtual function interface is generated through the laser projection assembly, the method further includes that a user triggers a physical button or virtual button corresponding to a power-on function on the washing device when using the washing device to wash clothes; and in response to detecting that the power-on function of the washing device is triggered, the washing device responds to the triggering operation of the power-on function to complete a power-on operation and control the laser projection assembly to turn on.

In an embodiment, the laser projection assembly includes a first light beam unit and an image generator. The first light beam unit may be an infrared light-emitting diode (LED) light source or an infrared laser diode (LD) light source. The image generator may be an optical engine made using digital light processing (DLP) technology or liquid crystal on silicon (LCOS) technology.

In an embodiment, generating the virtual function interface through the laser projection assembly and displaying the virtual function interface in the target projection region includes: generating a visible light beam through the first light beam unit and directing the visible light beam onto the image generator; generating the virtual function interface through the image generator, projecting the target projection region onto the blank housing of the front of the washing device, and projecting the virtual function interface onto the target projection region based on the visible light beam, thereby laser-displaying a virtual button interface within the target projection region. In other embodiments, the visible light beam may be collimated, and the collimated visible light beam is directed onto the image generator.

In an embodiment, the laser projection assembly further includes a second light beam unit; after the virtual function interface is displayed in the target projection region, the method further includes: generating an infrared light beam through the second light beam unit and emitting a parallel infrared light beam within the range of the target projection region so as to project the infrared light beam onto the target projection region. The size of the infrared light beam is consistent with the size of the visible light beam.

FIG. 2 is a side diagram of a laser projection assembly, in which reference numeral A denotes the first light beam unit, and reference numeral B denotes the second light beam unit. The first light beam unit A generates the visible light beam and projects the visible light beam carrying the virtual function interface onto the target projection region, and the second light beam unit B generates the infrared light beam and also projects the infrared light beam onto the target projection region.

In S120, a selection operation for the virtual function interface is received to determine a target program, and the home appliance is controlled to execute the target program.

In the embodiment of the present application, the user selects a to-be-executed washing parameter (such as water level, temperature, or number of rinses) from the virtual function interface; the washing device identifies the selection operation of the user, determines the washing parameter selected by the user, and uses the washing parameter selected by the user as the target program. Subsequently, the washing device is controlled to execute the target program so as to complete the washing task of the clothes.

In an embodiment, the method for identifying the selection operation of the user to obtain the target program may include: providing an image collection assembly beside the laser projection assembly; when the user performs the selection operation from the virtual function interface, acquiring an image of the target projection region through the image collection assembly, and identifying the collected image to obtain the operation content selected by the user, thereby determining the target program.

In the technical solutions provided in this embodiment, the virtual function interface is generated through the laser projection assembly, and the virtual function interface is displayed in the target projection region; and the selection operation for the virtual function interface is received to determine the target program, and the home appliance is controlled to execute the target program. In the present application, the home appliance is provided with the laser projection assembly, the virtual function interface is displayed in the target projection region through the laser projection assembly, and the operation content of the user on the virtual function interface is identified through the image collection assembly, thereby obtaining the to-be-executed target program and controlling the home appliance to execute the target program. The home appliance of the present application is not provided with a physical function panel, but the to-be-executed program is set for the home appliance through the virtual function interface. This can save the panel space of the home appliance, thereby reducing the product volume of the home appliance, reducing the space occupied by the home appliance, and enhancing the user experience in using the home appliance.

The device control method provided in the embodiment of the present application is further described below. FIG. 3 is a second flowchart of a device control method according to an embodiment of the present application. The embodiment of the present application is an optimization based on the preceding embodiment. Specifically, in this embodiment, the process of determining the target program based on the selection operation of the user for the virtual function interface is explained in detail.

Referring to FIG. 3, the method of this embodiment includes, but is not limited to, the steps below.

In S210, whether a human feature appears within the range of the infrared light beam is detected through the first light beam unit.

In the embodiment of the present application, the first light beam unit is not only configured to generate the visible light beam and project the visible light beam carrying the virtual function interface onto the target projection region, but may also have an infrared detection function. The first light beam unit is further configured to receive an infrared reflection signal of the infrared light beam. The human feature may be a finger or a palm, or may also be a stylus.

When using the washing device to wash the clothes, the user controls the laser projection assembly to turn on by pressing a power-on button of the washing device. The laser projection assembly projects the virtual function interface onto the housing of the washing device. After the projection is completed, the infrared detection function is activated to detect whether the human feature (such as the finger) of the user appears within the range of the infrared light beam.

In S220, if the human feature of the user appears within the range of the infrared light beam, an infrared reflection signal reflected by the human feature is received.

In the embodiment of the present application, when the first light beam unit detects that the human feature (such as the finger) appears within the range of the infrared light beam, part of the infrared light is reflected when the human feature appears in front of the infrared light beam, and the first light beam unit receives the infrared reflection signal reflected by the human feature. If no human feature is detected within a first set duration (such as T1), the laser projection assembly is turned off; if the user does not trigger the power-on button of the washing device within a second set duration (such as T2), the washing device is directly powered off. If the user triggers the power-on button of the washing device again, the laser projection assembly is turned on again.

In S230, false-touch detection is performed on the infrared reflection signal to obtain a detection result.

In an embodiment, performing the false-touch detection on the infrared reflection signal to obtain the detection result includes: acquiring a first infrared reflection signal corresponding to a preset number of detection cycles (three times); determining first positional information of the human feature in the target projection region according to the first infrared reflection signal; determining whether the first positional information has undergone a positional change; if the first positional information has undergone the positional change, determining that the detection result is a non-false touch.

When the first light beam unit receives the infrared reflection signal reflected by the human feature, the position of the human feature in the target projection region in that case is recorded every second set duration (such as T2, that is, one detection cycle). If no positional movement appears within the first set duration (that is, T1, and T1 > 3*T2), that is, at least three consecutive recordings show no movement, a false touch is determined. The reflection signal is then re-detected until a new positional signal appears. If the first positional information has undergone the positional change, it is determined that the detection result is the non-false touch.

In S240, in response to the detection result indicating a non-false touch, operation content information on the virtual function interface is determined according to the infrared reflection signal, and the target program is determined based on the operation content information.

In an embodiment, determining the operation content information on the virtual function interface according to the infrared reflection signal includes: over multiple consecutive detection cycles following the current detection cycle, determining respective positional information of the human feature in the target projection region according to the infrared reflection signal received in each detection cycle, to obtain multiple pieces of positional information; fitting the multiple pieces of positional information to obtain a fitting result; and if the fitting result is a straight line, matching the multiple pieces of positional information with positions of candidate operation contents on the virtual function interface to determine operation content information corresponding to the multiple pieces of positional information.

In the embodiment of the present application, a two-dimensional coordinate system may be established using the center or lower-left corner of a target projection position as the origin. The multiple pieces of positional information may be two-dimensional coordinate data in the two-dimensional coordinate system, and the position of each candidate operation content may also be two-dimensional coordinate data in the two-dimensional coordinate system.

In the embodiment of the present application, the two-dimensional coordinate data of the multiple pieces of positional information are matched with two-dimensional coordinate data corresponding to the multiple candidate operation contents in one-to-one correspondence so that the operation contents corresponding to the multiple pieces of positional information can be determined respectively, and the multiple operation contents are aggregated to determine the target program.

In the embodiment of the present application, the positions of the human feature in the target projection region are recorded within a third set duration (such as T3, and T3 > 3*T2), and are denoted as X1, X2, X3, ..., Xn respectively. Whether the N positions approximately form a straight line is determined. If the N positions approximately form the straight line, it is determined to be a manual finger slide. If the N positions do not form a straight line, and after the first set duration, no displacement appears within the first set duration, the false touch is determined. The recordings are cleared to wait for a new infrared reflection signal, and the preceding process is repeated.

In the technical solutions provided in this embodiment, whether the human feature appears within the range of the infrared light beam is detected through the first light beam unit; if detecting that the human feature appears within the range of the infrared light beam, the first light beam unit receives the infrared reflection signal reflected by the human feature; the false-touch detection is performed on the infrared reflection signal to obtain the detection result; in response to the detection result indicating the non-false touch, the operation content information on the virtual function interface is determined according to the infrared reflection signal, and the target program is determined based on the operation content information. In the present application, the operation content of the user on the virtual function interface is identified through the first light beam unit, thereby obtaining the to-be-executed target program. The home appliance of the present application is not provided with a physical function panel, but the to-be-executed program is set for the home appliance through the virtual function interface. This can save the panel space of the home appliance, thereby reducing the product volume of the home appliance, reducing the space occupied by the home appliance, and enhancing the user experience in using the home appliance.

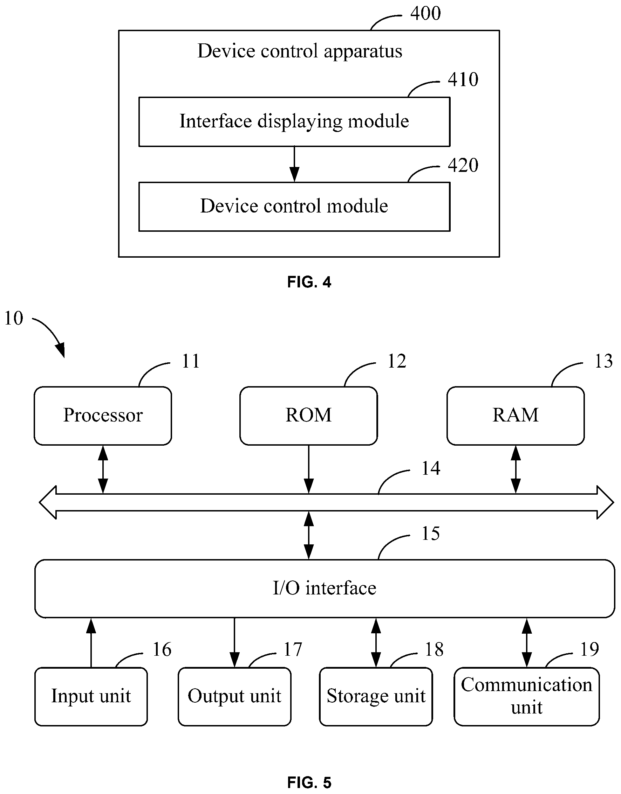

FIG. 4 is a diagram illustrating the structure of a device control apparatus according to an embodiment of the present application. The device control apparatus is integrated into a home appliance, and the home appliance is provided with a laser projection assembly. As shown in FIG. 4, the apparatus 400 may include the modules below.

An interface displaying module 410 is configured to generate a virtual function interface through the laser projection assembly and display the virtual function interface in a target projection region.

A device control module 420 is configured to receive a selection operation for the virtual function interface to determine a target program and control the home appliance to execute the target program.

In an embodiment, the laser projection assembly includes a first light beam unit and an image generator.

In an embodiment, the preceding interface displaying module 410 is configured to generate a visible light beam through the first light beam unit and direct the visible light beam onto the image generator; and generate the virtual function interface through the image generator and project the virtual function interface onto the target projection region based on the visible light beam.

In an embodiment, the laser projection assembly further includes a second light beam unit.

In an embodiment, the preceding interface displaying module 410 may be configured to, after the virtual function interface is displayed in the target projection region, generate an infrared light beam through the second light beam unit and project the infrared light beam onto the target projection region, where the size of the infrared light beam is consistent with the size of the visible light beam.

In an embodiment, the preceding device control module 420 is configured to detect, through the first light beam unit, whether a human feature appears within the range of the infrared light beam; receiving an infrared reflection signal reflected by the human feature if the first light beam unit detects that the human feature appears within the range of the infrared light beam; performing false-touch detection on the infrared reflection signal to obtain a detection result; and in response to the detection result indicating a non-false touch, determining operation content information on the virtual function interface according to the infrared reflection signal, and determining the target program based on the operation content information.

In an embodiment, the preceding device control module 420 is configured to, over multiple consecutive detection cycles following the current detection cycle, determine respective positional information of the human feature in the target projection region according to the infrared reflection signal received in each detection cycle, to obtain multiple pieces of positional information; fit the multiple pieces of positional information to obtain a fitting result; and if the fitting result is a straight line, match the multiple pieces of positional information with positions of multiple candidate operation contents on the virtual function interface to determine operation content information corresponding to the multiple pieces of positional information.

In an embodiment, the preceding device control module 420 is configured to acquire a first infrared reflection signal corresponding to a preset number of detection cycles; determine first positional information of the human feature in the target projection region according to the first infrared reflection signal; determine whether the first positional information has undergone a positional change; and in response to the first positional information having undergone the positional change, determine that the detection result is the non-false touch.

In an embodiment, the preceding device control apparatus may further include an assembly activation module. The assembly activation module is configured to, before the virtual function interface is generated through the laser projection assembly, control the laser projection assembly to turn on in response to detecting that a power-on function of the home appliance is triggered.

The device control apparatus provided in this embodiment is applicable to the device control method provided in any of the preceding embodiments, and has corresponding functions and beneficial effects.

FIG. 5 is a block diagram of a home appliance for implementing a device control method according to an embodiment of the present application. The home appliance 10 is intended to represent a digital computer in various forms, for example, a laptop computer, a desktop computer, a worktable, a personal digital assistant, a server, a blade server, a mainframe computer, or another applicable computer. The home appliance may also represent a mobile apparatus in various forms, for example, a personal digital assistant, a cellphone, a smartphone, a wearable device (such as a helmet, glasses, or a watch), or another similar computing apparatus. Herein the shown components, the connections and relationships between these components, and the functions of these components are illustrative and are not intended to limit the implementation of the present application as described and/or claimed herein.

As shown in FIG. 5, the home appliance 10 includes at least one processor 11 and a memory communicatively connected to the at least one processor 11, such as a read-only memory (ROM) 12, a random-access memory (RAM) 13, and the like. The memory stores a computer program executable by the at least one processor to cause the at least one processor to perform the preceding device control method. A processor 11 may perform and process various appropriate actions based on a computer program stored in the read-only memory (ROM) 12 or a computer program loaded from a storage unit 18 to the random-access memory (RAM) 13. The RAM 13 may also store various programs and data required for the operation of the home appliance 10. The processor 11, the ROM 12, and the RAM 13 are connected to each other through a bus 14. An input/output (I/O) interface 15 is also connected to the bus 14.

Multiple components in the home appliance 10 are connected to the I/O interface 15. The multiple components include an input unit 16 such as a keyboard or a mouse, an output unit 17 such as various types of display or speaker, the storage unit 18 such as a magnetic disk or an optical disk, and a communication unit 19 such as a network card, a modem, or a wireless communication transceiver. The communication unit 19 allows the home appliance 10 to exchange information/data with other devices over a computer network such as the Internet and/or various telecommunications networks.

The processor 11 may be at least one of a general-purpose processing assembly or a special-purpose processing assembly having processing and computing capabilities. Examples of the processor 11 include, but are not limited to, a central processing unit (CPU), a graphics processing unit (GPU), a special-purpose artificial intelligence (AI) computing chip, a processor executing machine learning models and algorithms, a digital signal processor (DSP), and any appropriate processor, controller and microcontroller. The processor 11 executes and processes each of the preceding methods, such as the device control method.

The present application further provides a computer-readable storage medium. The computer-readable storage medium stores computer instructions that, when executed by a processor, are configured to cause the processor to perform the device control method of any embodiment of the present application.

It is to be noted that the preceding computer instructions may be wholly or partially stored on the computer-readable storage medium. The computer-readable storage medium may be packaged together with a processor of the device control apparatus, or may be packaged separately from a processor of the device control apparatus, which is not limited in the present application.

In some embodiments, the device control method may be implemented as computer programs tangibly contained in the computer-readable storage medium such as the storage unit 18. In some embodiments, part or all of the computer programs may be loaded and/or mounted onto the home appliance 10 via the ROM 12 and/or the communication unit 19. When the computer programs are loaded to the RAM 13 and executed by the processor 11, one or more steps of the preceding device control method may be performed. In other embodiments, the processor 11 may be configured, in any other suitable manner (for example, by means of firmware), to perform the device control method.

Herein various embodiments of the systems and techniques described in the preceding may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. A programmable processor may be a special-purpose or general-purpose programmable processor for receiving data and instructions from a memory system, at least one input apparatus, and at least one output apparatus and transmitting data and instructions to the memory system, the at least one input apparatus, and the at least one output apparatus.

Computer programs for implementation of the methods of the present application may be written in one programming language or any combination of multiple programming languages. These computer programs may be provided for a processor of a general-purpose computer, a special-purpose computer or another programmable data processing apparatus such that the computer programs, when executed by a processor, cause functions/operations specified in the flowcharts and/or block diagrams to be implemented. The computer programs may be executed entirely on a machine, partly on a machine, as a stand-alone software package, partly on a machine and partly on a remote machine, or entirely on a remote machine or a server.

In the context of the present application, the computer-readable storage medium may be a tangible medium that may include or store a computer program used by or in conjunction with an instruction execution system, apparatus, or device. The computer-readable storage medium may include, but is not limited to, an electronic, magnetic, optical, electromagnetic, infrared, or semiconductor system, apparatus, or device, or any appropriate combination thereof. In an embodiment, the computer-readable storage medium may be a machine-readable signal medium. Examples of a machine-readable storage medium include an electrical connection based on one or more wires, a portable computer disk, a hard disk, a RAM, a ROM, an erasable programmable read-only memory (EPROM), a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on the home appliance. The home appliance has a display apparatus (for example, a cathode-ray tube (CRT) or a liquid-crystal display (LCD) monitor) for displaying information to the user, and a keyboard and a pointing apparatus (for example, a mouse or a trackball) through which the user can provide input for the home appliance. Other types of apparatuses may also be used for providing interaction with the user. For example, feedback provided for the user may be sensory feedback in any form (for example, visual feedback, auditory feedback, or tactile feedback); and input from the user may be received in any form (including acoustic input, voice input, or tactile input).

The systems and techniques described herein may be implemented in a computing system including a back-end component (for example, a data server), a computing system including a middleware component (for example, an application server), a computing system including a front-end component (for example, a client computer having a graphical user interface or a web browser through which the user can interact with embodiments of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related VPS service.

## Claims

1. A device control method, applied to a home appliance, wherein the home appliance is provided with a laser projection assembly, and comprising:
generating, by the laser projection assembly, a virtual function interface and displaying the virtual function interface in a target projection region; and
receiving a selection operation for the virtual function interface to determine a target program and controlling the home appliance to execute the target program.

2. The device control method of claim 1, wherein the laser projection assembly comprises a first light beam unit and an image generator, and wherein generating, by the laser projection assembly, the virtual function interface and displaying the virtual function interface in the target projection region comprises:
generating, by the first light beam unit, a visible light beam and directing the visible light beam onto the image generator; and
generating, by the image generator, the virtual function interface and projecting the virtual function interface onto the target projection region based on the visible light beam.

3. The device control method of claim 2, wherein the laser projection assembly further comprises a second light beam unit, and wherein after the virtual function interface is displayed in the target projection region, the device control method further comprises:
generating, by the second light beam unit, an infrared light beam and projecting the infrared light beam onto the target projection region, wherein a size of the infrared light beam is consistent with a size of the visible light beam.

4. The device control method of claim 3, wherein receiving the selection operation for the virtual function interface to determine the target program comprises:
detecting, by the first light beam unit, whether a human feature appears within a range of the infrared light beam;
receiving an infrared reflection signal reflected by the human feature in response to the human feature appearing within the range of the infrared light beam;
performing false-touch detection on the infrared reflection signal to obtain a detection result; and
in response to the detection result indicating a non-false touch, determining operation content information on the virtual function interface according to the infrared reflection signal, and determining the target program based on the operation content information.

5. The device control method of claim 4, wherein determining the operation content information on the virtual function interface according to the infrared reflection signal comprises:
over a plurality of consecutive detection cycles following a current detection cycle, determining respective positional information of the human feature in the target projection region according to the infrared reflection signal received in each of the plurality of detection cycles, to obtain a plurality of pieces of positional information;
fitting the plurality of pieces of positional information to obtain a fitting result; and
in response to the fitting result being a straight line, matching the plurality of pieces of positional information with positions of candidate operation contents on the virtual function interface to determine operation content information corresponding to the plurality of pieces of positional information.

6. The device control method of claim 4, wherein performing the false-touch detection on the infrared reflection signal to obtain the detection result comprises:
acquiring a first infrared reflection signal corresponding to a preset number of detection cycles;
determining first positional information of the human feature in the target projection region according to the first infrared reflection signal;
determining whether the first positional information has undergone a positional change; and
in response to the first positional information having undergone the positional change, determining that the detection result is the non-false touch.

7. The device control method of claim 1, before generating the virtual function interface through the laser projection assembly, further comprising:
controlling the laser projection assembly to turn on in response to detecting that a power-on function of the home appliance is triggered.

8. A device control apparatus, integrated into a home appliance, wherein the home appliance is provided with a laser projection assembly, and comprising:
an interface displaying module configured to generate a virtual function interface through the laser projection assembly and display the virtual function interface in a target projection region; and
a device control module configured to receive a selection operation for the virtual function interface to determine a target program and control the home appliance to execute the target program.

9. A home appliance, comprising:
at least one processor; and
a memory communicatively connected to the at least one processor,
wherein the memory stores a computer program executable by the at least one processor to cause the at least one processor to perform the device control method of any one of claims 1 to 7.

10. A computer-readable storage medium storing computer instructions that, when executed by a processor, are configured to cause the processor to perform the device control method of any one of claims 1 to 7.
